(19) Europäisches Patentamt

European Patent Office

Office européen des brevets

(11) EP 0 748 165 B1

(12) EUROPEAN PATENT SPECIFICATION

(45) Date of publication and mention
of the grant of the patent:
06.05.1999 Bulletin 1999/18

(51) Int. Cl.$^6$: A23D 7/00

(86) International application number:
PCT/EP95/00720

(21) Application number: 95909790.8

(22) Date of filing: 28.02.1995

(87) International publication number:
WO 95/23518 (08.09.1995 Gazette 1995/38)

(54) **PLASTIC REDUCED FAT SPREAD**

PLASTISCHER FETTARMER BROTAUFSTRICH

PATE A TARTINER ALLEGEE EN GRAISSES ET MALLEABLE

(84) Designated Contracting States:
BE DE DK FR GB IE NL SE

(30) Priority: 02.03.1994 EP 94200522

(43) Date of publication of application:
18.12.1996 Bulletin 1996/51

(73) Proprietors:
• UNILEVER N.V.
3013 AL Rotterdam (NL)
Designated Contracting States:
BE DE DK FR NL SE
• UNILEVER PLC
London EC4P 4BQ (GB)
Designated Contracting States:
GB IE

(72) Inventors:
• VERMAAS, Leo, Frans
NL-3145 VN Maassluis (NL)
• CORNELISSEN, Johannes, Mattheus
NL-3137 CN Vlaardingen (NL)
• LANSBERGEN, Adrianus, Jacobus
NL-3132 VN Vlaardingen (NL)

(74) Representative:
Joppe, Hermina L. P. et al
Unilever N.V.
Patent Division
P.O. Box 137
3130 AC Vlaardingen (NL)

(56) References cited:
EP-A- 0 398 412          EP-A- 0 420 315
EP-A- 0 422 713          EP-A- 0 473 854
EP-A- 0 474 299          EP-A- 0 480 531
EP-A- 0 496 466

**Description**

The present invention relates to a plastic reduced fat spread and a process for its manufacture.

Plastic fat spreads such as butter, margarine, reduced fat spreads and similar water-fat emulsions are well known in the art.

Consumers in their attempt to reduce their calory intake without in practice changing their eating habits are asking for a reduction of the fat content in fat spreads. This will be resulting in an increase of the amount of water-phase rendering these spreads in general more vulnerable to spoilage because of a reduced microbiological stability. Although this may be remedied by adding a suitable preservative the same conscious consumers are equally asking for a reduction of "additives", including preservatives.

EP-A-422 712 teaches already that preservatives may be reduced by concentration or even dispensed with in reduced fat spreads while maintaining an acceptable microbiological stability by a clever composition of the aqueous phase combined with a processing step comprising homogenising a substantially protein-free water-in-oil emulsion and thereafter working and cooling the homogenized product, resulting in a fine-droplet-size W/O emulsion having a narrow droplet size distribution. Although good results are achieved using this process, it goes with some inconvenient limitations: the requirement of being substantially protein-free, generally adversely influencing the organoleptic properties; an unreliable stability at the lower end of the fat concentration range and the impossibility to use the reliable phase inversion process: i.e. starting with an oil-in-water dispersion which during the processing is inverted into a water-in-oil emulsion.

EP-A-480 315 discloses a very low fat spread having 15 - 30% of a continuous fat phase having a pH value between 4.8 and 5.5 and a fairly high cooking salt level of about 1.5%.

EP-A- 496 466 discloses fat continuous emulsion spreads having a fairly high cooking salt level of about 1% and a pH value of about 5. For controlling the microbiological stability suitable preservative are to be used.

It is an object of the invention to provide a stable fat-continuous, plastic, reduced-fat spread-product, and a process for manufacturing it, which under normal conditions of use and storage does not require the presence of preserving additives for exhibiting an acceptable microbiological stability, which shows good organoleptic properties and an easy spreadability.

The invention provides thereto a stable, plastic, fat-continuous 30-50% fat spread comprising up to 0.3% and preferably about 0.2% lecithin, 0.1 - 1.0 saturated monoglyceride, 0.06 - 0.2% and preferably 0.07 to 0.08% non-gelling protein, 0.2 - 8% thickening agent, up to 0.5% NaCl, the fat-phase having an $N_{10}$ = 8 - 40% preferably <35% and in particular <30% and an $N_{20}$ = 5 - 20% preferably <18% and in particular <14%, the aqueous phase having a pH value of 4.4. to 4.7 and a $\overline{D}_{3,3} \leq 7$ μm and an e sigma ≤ 2.5. $\overline{D}_{3,3}$ and e sigma are defined as the volume weighted mean particle diameter and the deviation to the mean value respectively.

The above product has an acceptable microbiological stability with little or even without preservatives. It does not need explanation that for improved microbiological stability the application of usual preservatives is not excluded. Preferred values for the lecithin content being about 0.2%. Preferred non-gelling proteins for use in this spread being whey protein, soy protein and mixtures thereof for organoleptic and stability reasons. Suitable thickening agents being gelatin, alginate, carrageenans, gums, starches, modified starches and mixtures thereof.

The invention also provides a process for manufacturing a spread as defined before comprising preparing a mixture of 30 - 50% of a fat having $N_{10}$ = 8 - 40% preferably <35% and in particular <30% and $N_{20}$ = 5 - 20% preferably <18% and in particular <14%, comprising up to 0.3% lecithin and 0.1 - 1.0% saturated monoglyceride and 50 - 70% of an aqueous phase of pH 4.4 to 4.7 comprising 0.06 - 0.2% non-gelling protein, 0.2 - 8% thickening agent, up to 0.5% NaCl to give an O/W emulsion which is thereafter cooled and worked and thereby inverted into a W/O emulsion. This working and cooling step should be such that the resulting product has a temperature below 20°C to achieve the desired droplet size and droplet size distribution. For even finer emulsions temperatures below 17°C and in particular below 15°C are being preferred.

For a better understanding of the invention an at this moment preferred embodiment will be described in the following example.

In this specification, example and claims all parts and percentages refer to weights unless otherwise indicated.

Example:

A reduced fat spread is prepared using the following ingredients:

```
39.6%     fat blend                    ⎫
 0.2%     Hymono 8803 TM               ⎬      fat phase
 0.2%     Bolec ZTD TM                 ⎭

 0.1%     WPC                          ⎫
 2.5%     gelatin                      ⎪
 0.3%     NaCl                         ⎬      aqueous phase
trace flavour                          ⎪
trace colorant                         ⎪
acid regulator - to pH 4.5             ⎪
water to 100%                          ⎭
```

The fat blend is made up of 47% unhardened soy bean oil and 53% of an interesterified mixture of 33% coconut oil, 44% palm oil, 11% palm oil stearin and 12% rape oil hardened to a melting point of 41°C. This fat blend has an $N_{10}$ = 27 and an $N_{20}$ = 11, determined by NMR (Fette, Seifen, Anstrichmittel: 80 (1978) 180 - 186).
Hymono 8803 is a saturated monoglyceride ex Quest International. Bolex ZTD is a soy bean lecithin ex Quest. WPC is a whey protein concentrate having 75% protein.

The fat phase is prepared by mixing the ingredients at 55°C and thereafter the aqueous phase is mixed in, controlled at pH 4.5 using citric acid. Thereafter the combined mix is pasteurized and fed at a rate of 70 kg/hr through a sequence of two surface scraped heat exchangers (SSHE), a C-unit as invertor, a third SSHE and a crystallizer, from which the product is packaged in tubs.
The first two SSHE's are driven at 600 rpm and equipped with two rows of scrapers. The cooling is controlled such that the product leaves the second SSHE at a temperature between 6 and 10°C.

The invertor C-unit has a capacity of 1.5 l and is driven at 1500 rpm. The third SSHE is similar to the first ones but is driven at 800 rpm and cooled such that the product leaves at 8-10°C. The crystallizer has a capacity of 1.5 l and is driven at 200 rpm. The product emerges therefrom at 13-14°C and is directly filled into tubs. The product shows a sufficient keepability, both at refrigeration and at temporary room temperature. Use tests showed a good oral response and a good spreadability.

**Claims**

1. A plastic fat-continuous 30 - 50% fat spread comprising up to 0.3% lecithin, 0.1 - 1.0% saturated monoglyceride, 0.06 - 0.2% non-gelling protein, 0.2 - 8% thickening agent, up to 0.5% NaCl, the fat blend having $N_{10}$ = 8 - 40% preferably <35% and in particular <30% and $N_{20}$ = 5 - 20% preferably <18% and in particular <14% the aqueous phase having a pH value of 4.4 - 4.7 and a $\overline{D}_{3,3} \leq 7$ μm and e sigma ≤ 2.5.

2. Spread according to claim 1, wherein the non-gelling protein is selected from whey protein, soy protein and mixtures thereof.

3. Spread according to Claim 1 or 4, comprising about 0.2% lecithin.

4. Spread according to Claims 1 - 3, comprising 0.07 to 0.08% non-gelling protein.

5. Spread according to Claims 1 - 4, comprising gelatin or alginate as a thickening agent.

6. Spread according to Claim 5, additionally comprising starch as a thickening agent.

7. A process for manufacturing a spread comprising preparing a mixture of 30 - 50% of a fat having $N_{10}$ = 8 - 40% preferably <35% and in particular <30% and $N_{20}$ = 5 - 20% preferably < 18% and in particular <14%, comprising up to 0.3% lecithin and 0.1 - 1.0% saturated monoglyceride, and 50 - 70% of an aqueous phase of pH 4.4 - 4.7 comprising 0.06 - 0.2% non-gelling protein, 0.2 - 8% thickening agent, up to 0.5% NaCl and usual minor constituents to give an O/W emulsion which is thereafter worked and cooled and thereby inverted into a W/O emulsion, the cooling being such that the resulting product has a temperature below 20°C.

8. The process according to Claim 7, wherein the cooling is such that a temperature below 17°C and preferably below 15°C is effected.

## Patentansprüche

1. Plastischer, fettkontinuierlicher Brotaufstrich mit 30 bis 50% Fett, umfassend bis zu 0,3% Lecithin, 0,1 bis 1,0% gesättigtes Monoglycerid, 0,06 bis 0,2% nichtgelierendes Protein, 0,2 bis 8% Verdickungsmittel und bis zu 0,5% NaCl, wobei das Fettgemisch einen $N_{10}$ = 8-40%, vorzugsweise < 35% und insbesondere < 30%, und einen $N_{20}$ = 5-20%, vorzugsweise < 18% und insbesondere < 14%, aufweist und die wäßrige Phase einen pH-Wert von 4,4 bis 4,7 und einen $\overline{D}_{3,3} \leq 7$ μm und ein e sigma $\leq 2.5$ aufweist.

2. Brotaufstrich nach Anspruch 1, in welchem das nichtgelierende Protein aus Molkeprotein, Sojaprotein und Mischungen davon ausgewählt ist.

3. Brotaufstrich nach Anspruch 1 oder 2, umfassend etwa 0,2% Lecithin.

4. Brotaufstrich nach den Ansprüchen 1 bis 3, umfassend 0,07 bis 0,08% nichtgelierendes Protein.

5. Brotaufstrich nach den Ansprüchen 1 bis 4, umfassend Gelatine oder Alginat als Verdickungsmittel.

6. Brotaufstrich nach Anspruch 5, der zusätzlich Stärke als Verdickungsmittel umfaßt.

7. Verfahren zur Herstellung eines Brotaufstrichs, umfassend das Herstellen einer Mischung aus 30 bis 50% eines Fettes mit $N_{10}$ = 8-40%, vorzugsweise < 35% und insbesondere < 30%, und $N_{20}$ = 5-20%, vorzugsweise < 18% und insbesondere < 14%, umfassend bis zu 0,3% Lecithin und 0,1 bis 1,0% gesättigtes Monoglycerid, und 50 bis 70% einer wäßrigen Phase eines pH-Wertes von 4,4 bis 4,7, umfassend 0,06 bis 0,2% nichtgelierendes Protein, 0,2 bis 8% Verdickungsmittel, bis zu 0,5% NaCl und übliche geringfügige Bestandteile, um eine O/W-Emulsion zu ergeben, die anschließend bearbeitet und gekühlt und dadurch in eine W/O-Emulsion invertiert wird, wobei das Kühlen so erfolgt, daß das erhaltene Produkt eine Temperatur von weniger als 20°C aufweist.

8. Verfahren nach Anspruch 7, bei dem das Kühlen so erfolgt, daß eine Temperatur von weniger als 17°C und vorzugsweise weniger als 15°C erreicht wird.

## Revendications

1. Pâte à tartiner à 30-50% de graisse continue en graisse, malléable comprenant jusqu'à 0,3% de lécithine, 0,1 à 1,0% de monoglycéride saturé, 0,06 - 0,2% de protéine non gélifiante, 0,2 à 8% d'agent épaississant, jusqu'à 0,5% de NaCl, le mélange gras ayant un $N_{10}$ = 8 - 40%, de préférence <35% et en particulier <30% et un $N_{20}$ = 5 - 20%, de préférence <18% et, en particulier, <14%, la phase aqueuse ayant une valeur de pH de 4,4 - 4,7 et un $\overline{D}_{3,3}$ < ou égal à 7 μm et un e sigma < ou égal à 2,5.

2. Pâte à tartiner selon la revendication 1, dans lequel la protéine non gélifiante est choisie parmi la protéine de petit lait, la protéine de soja et leurs mélanges.

3. Pâte à tartiner selon la revendication 1 ou 2, comprenant environ 0,2% de lécithine.

4. Pâte à tartiner selon les revendications 1-3, comprènant 0,07 à 0,08% de protéine non gélifiante.

5. Pâte à tartiner selon les revendications 1 à 4, comprenant de la gélatine ou un alginate comme agent épaississant.

6. Pâte à tartiner selon la revendication 5, comprenant en outre de l'amidon comme agent épaississant.

7. Procédé de fabrication d'une pâte à tartiner comprenant la préparation d'un mélange de 30 à 50% d'une graisse ayant un $N_{10}$ = 8 à 40%, de préférence <35% et, en particulier, <30% et un $N_{20}$ = 5 à 20%, de préférence <18%, et en particulier <14%, comprenant jusqu'à 0,3% de lécithine et 0,1 - 1,0% de monoglycéride saturé, et 50 à 70% d'une phase aqueuse de pH 4,4 à 4,7 comprenant 0,06 à 0,2% de protéine non gélifiante, 0,2 à 8% d'agent épaississant, jusqu'à 0,5% de NaCl et les constituants secondaires habituels pour donner une émulsion H/E qui est ensuite travaillée et refroidie, puis inversée en une émulsion E/H, le refroidissement étant tel que le produit résultant a une température en dessous de 20°C.

8. Procédé selon la revendication 7, dans lequel le refroidissement est tel qu'on réalise une température en dessous de 17°C et de préférence en dessous de 15°C.